(19)

**Europäisches Patentamt**
**European Patent Office**
**Office européen des brevets**

(11) **EP 3 681 916 B1**

(12) **EUROPEAN PATENT SPECIFICATION**

(45) Date of publication and mention
of the grant of the patent:
**05.06.2024 Bulletin 2024/23**

(51) International Patent Classification (IPC):
***C08F 210/16*** (2006.01)  ***C08L 23/14*** (2006.01)
***C08F 210/06*** (2006.01)

(21) Application number: **18759120.1**

(52) Cooperative Patent Classification (CPC):
(C-Sets available)
**C08F 210/16; C08F 210/06; C08L 23/14;**
C08L 2203/16  (Cont.)

(22) Date of filing: **30.08.2018**

(86) International application number:
**PCT/EP2018/073313**

(87) International publication number:
**WO 2019/052822 (21.03.2019 Gazette 2019/12)**

(54) **PROPYLENE ETHYLENE RANDOM COPOLYMER**

PROPYLENETHYLEN-RANDOM-COPOLYMER

COPOLYMÈRE STATISTIQUE DE PROPYLÈNE ET D'ÉTHYLÈNE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **14.09.2017 EP 17190989**
**13.06.2018 EP 18177535**

(43) Date of publication of application:
**22.07.2020 Bulletin 2020/30**

(73) Proprietor: **Basell Poliolefine Italia S.r.l.**
**20121 Milano (IT)**

(72) Inventors:
• **MASSARI, Paola**
**44122 Ferrara (IT)**
• **CAVALIERI, Claudio**
**44122 Ferrara (IT)**
• **TARTARI, Davide**
**44122 Ferrara (IT)**
• **CAPUTO, Tiziana**
**44122 Ferrara (IT)**
• **CAMURATI, Isabella Maria Vittoria**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 0 728 769  EP-B1- 0 782 587**
**WO-A1-2015/117948**

(52) Cooperative Patent Classification (CPC): (Cont.)

C-Sets
**C08F 210/06, C08F 4/6492;**
**C08F 210/06, C08F 210/02, C08F 2500/12,**
**C08F 2500/17, C08F 2500/26;**
**C08F 210/16, C08F 4/6492;**
**C08F 210/16, C08F 210/06, C08F 2500/12,**
**C08F 2500/17, C08F 2500/26;**
**C08L 23/14, C08L 23/14**

**Description**

FIELD OF THE INVENTION

The present disclosure relates to propylene ethylene random copolymer obtained with a gas phase process particularly fits for films or injection moulded articles.

BACKGROUND OF THE INVENTION

As is known, the isotactic polypropylene is endowed with an exceptional combination of excellent properties which render it suitable for a very great number of uses.

In order to improve the properties of the isotactic polypropylene the crystallinity of the propylene homopolymer is decreased by copolymerization of the propylene with small quantities of ethylene and/or a-olefins such as 1-butene, 1-pentene and 1-hexene. In this manner one obtains the so called random crystalline propylene copolymers which, when compared to the homopolymer, are essentially characterized by better flexibility and transparency.

PCT/EP2018/057505 describes a propylene-ethylene copolymer having:

ethylene derived units content ranging from 2.0 wt% to 11.0 wt%;
the fraction soluble in xylene at 25°C (Xs) ranging from 7.1 wt% to 28.5 wt%;
the intrinsic viscosity of the fraction soluble in xylene at 25°C ranges from 3.2 dl/g to 5.6 dl/g.

The characteristic of the product described is to have an high modulus with respect to the ethylene content and the fraction soluble in xylene. However the product described in PCT/EP2018/057505 is also endowed with an high intrinsic viscosity that could be detrimental in term of processability.

It has now been found that a particularly good balance between low modulus and molecular weight is achieved by a propylene ethylene random copolymer having specific structural features.

SUMMARY OF THE INVENTION

Thus, the present disclosure provides
a propylene ethylene copolymer having:

i) xylene soluble fraction at 25°C ranging from 14 wt% to 27 wt%;
ii) intrinsic viscosity of the fraction soluble in xylene at 25°C ranging from 1.0 to 2.4 dl/g;
iii) melt flow rate, **MFR,** measured according to ISO 1133 at 230 °C with a load of 2.16 kg, ranging from 1.0 g/10 min to 50 g/10 min;
iv) an ethylene derived units content ranging from 5.0 wt% to 12.0 wt%
v) the ethylene derived units content on the fraction insoluble in xylene at 25°C ranging from 2.5 wt% to 6.0 wt%;
vi) the ethylene derived units content on the fraction soluble in xylene at 25°C ranging from 17.2. wt% to 24.8 wt%
vii) the $C^{13}$ NMR sequences PEP measured on the fraction insoluble in xylene at 25°C ranging from 3.5mol% to 5.5mol% and the $C^{13}$ NMR sequences PEP measured on the fraction soluble in xylene at 25°C ranging from 11.0 mol% to 14.2 mol%.

DETAILED DESCRIPTION OF THE INVENTION

Thus, the present disclosure provides a propylene ethylene copolymer having:

i) xylene soluble fraction at 25°C ranging from 14 wt% to 27 wt%; preferably from 17 wt% to 25 wt%; more preferably from 18 wt% to 22 wt;
ii) intrinsic viscosity of the fraction soluble in xylene at 25°Cranging from 1.0 to 2.4 dl/g; preferably from 1.5 to 2.2 dl/g; more preferably from 1.7 to 2.1 dl/g;
iii) melt flow rate, **MFR,** measured according to ISO 1133 at 230 °C with a load of 2.16 kg, ranging from 1.0 g/10 min to 50.0 g/10 min; preferably from 1.4 g/10 min to 20.2 g/10 min; more preferably from 1.6 g/10 min to 4.0 g/10 min;
v) the ethylene derived units content on the fraction insoluble in xylene at 25°C ranging from 2.5 wt% to 6.0 wt%; preferably ranging from 3.2wt% to 5.2wt%; more preferably ranging from 3.5wt% to 5.0wt%;
vi) the ethylene derived units content on the fraction soluble in xylene at 25°C ranging from 17.2wt% to 24.8wt%; preferably ranging from 18.2wt% to 22.8wt%;
vii) the $C^{13}$ NMR sequences PEP measured on the fraction insoluble in xylene

at 25°C ranging from 3.5 mol% to 5.5mol%; preferably ranging from 3.8mol% to 5.2mol%; more preferably ranging from 3.9mol% to 4.8 mol% and the C$^{13}$ NMR sequences PEP measured on the fraction soluble in xylene at 25°C ranging from 11.0 mol% to 14.2 mol%; preferably ranging from 11.5 mol% to 13.8 mol%; more preferably ranging from 12.3 mol% to 13.5 mol%.

Por the present disclosure, the term "copolymer" is referred to polymers containing only two kinds of comonomers, such as propylene and ethylene.

Preferably in the propylene ethylene copolymer the C$^{13}$ NMR sequences PEE measured on the fraction soluble in xylene at 25°C range from 7.2 mol% to 12.0 mol%; preferably range from 8.3 mol% to 11.2 mol%.

Preferably in the propylene ethylene copolymer the C$^{13}$ NMR sequences EEE measured on the fraction soluble in xylene at 25°C are lower than 6.5 mol% preferably in a range from 5.9 mol% to 2.0 mol%.

Preferably in the propylene ethylene copolymer the ratio rlr2 of the fraction unsoluble in xylene at 25°C measured with C$^{13}$ NMR is comprised between 2.4 and 4.6; preferably between 2.9 and 4.1; more preferably between 3.1 and 3.8.

Propylene ethylene copolymer is obtained with a process being carried out in a reactor having two interconnected polymerization zones, a riser and a downcomer, wherein the growing polymer particles:

(a) flow through the first of said polymerization zones, the riser, under fast fluidization conditions in the presence of propylene and of ethylene;

(b) leave the riser and enter the second of said polymerization zones, the downcomer, through which they flow downward in a densified form in the presence of propylene and of ethylene, wherein the concentration of ethylene in the downcomer is higher than in the nser;

(e) leave the downcomer and are reintroduced into the riser, thus establishing a circulation of polymer between the riser and the downcomer.

In the first polymerization zone (riser), fast fluidization conditions are established by feeding a gas mixture comprising one or more alpha-olefins at a velocity higher than the transport velocity of the polymer particles. The velocity of said gas mixture is generally comprised between 0.5 and 15 m/s, preferably between 0.8 and 5 m/s. The terms "transport velocity" and "fast fluidization conditions" are well known in the art; fora definition thereof, see, for example, "D. Geldart, Gas Fluidisation Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer. Throughout the present description a "densified form" of the polymer implies that the ratio between the mass of polymer particles and the reactor volume is higher than 80% of the "poured bulk density" of the obtained polymer. The "poured bulk density" of a polymer is a parameter well known to the person skilled in the art. In view of the above, it is clear that in the downcomer the polymer flows downward in a plug flow and only small quantities of gas are entrained with the polymer particles.

According to the process of the present disclosure, the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser. In order to comply with this process feature, one or more feeding lines for the barrier stream are placed in the downcomer dose to the upper limit of the volume occupied by the polymer particles flowing downward in a densified form.

This liquid/gas mixture fed into the upper part of the downcomer partially replaces the gas mixture entrained with the polymer particles entering the downcomer. The partial evaporation of the liquid in the barrier stream generates in the upper part of the downcomer a flow of gas, which moves counter-currently to the flow of descendent polymer, thus acting as a barrier to the gas mixture coming from the riser and entrained among the polymer particles. The liquid/gas barrier fed to the upper part of the downcomer can be sprinkled over the surface of the polymer particles: the evaporation of the liquid will provide the required upward flow of gas.

The feed of the barrier stream causes a difference in the concentrations of monomers and/or hydrogen (molecular weight regulator) inside the riser and the downcomer, so that a bimodal polymer can be produced.

It is known that in a gas-phase polymerization process the reaction mixture comprises, besides the gaseous monomers, also inert polymerization diluents and chain transfer agents, such as hydrogen, useful to regulate the molecular weight of the obtained polymeric chains. The polymerization diluents are preferably selected from C2-C8 alkanes, preferably propane, isobutane, isopentane and hexane. Propane is preferably used as the polymerization diluent in the gas-phase polymerization of the disclosure, so that liquid propane is unavoidably contained in the barrier stream, which is fed to the upper part of the downcomer.

In one embodiment, the barrier steam comprises:

1. from 10 to 100% by mol of propylene;

11. from O to 80% by mol of ethylene;

111. from O to 30% by mol of propane;

1v. from O to 5% by mol of hydrogen.

The above indicated compositions of barrier stream can be obtained from the condensation of a part of the fresh monomers and propane, said condensed part being fed to the upper part of the downcomer in a liquid form. According to an embodiment, the above suitable compositions of barrier stream derive from condensation and/or distillation of part of a gaseous stream continuously recycled to the reactor having two interconnected polymerization zones. Additional liquid and/or gas of suitable composition can be fed along the downcomer at a point below the barrier stream.

The recycle gas stream is generally withdrawn from a gas/solid separator placed downstream the riser, cooled by passage through an external heat exchanger and then recycled to the bottom of the riser. Of course, the recycle gas stream comprises, besides the gaseous monomers, hydrogen. Moreover, the composition of the barrier stream deriving from condensation and/or distillation of the gas recycle stream may be suitably adjusted by feeding liquid make-up monomers and propane before its introduction into the upper part of downcomer.

The operating parameters of temperature and pressure are those that are usual in gas-phase catalytic polymerization processes. Por example, in both riser and downcomer the temperature is generally comprised between 60°C and 120°C, while the pressure can range from 5 to 40 bar.

The process for preparing the propylene ethylene copolymer of the present disclosure is carried out in presence of a highly stereospecific heterogeneous Ziegler-Natta catalyst. The Ziegler-Natta catalysts suitable for producing the propylene ethylene copolymer of the disclosure comprise a solid catalyst component comprising at least one titanium compound having at least one titanium-halogen bond and at least an electron-donar compound (internal donor), both supported on magnesium chloride. The Ziegler-Natta catalysts systems further comprise an organo-aluminum compound as essential co-catalyst and optionally an external electron-donar compound.

Suitable catalysts systems are described in the European patents EP45977, EP361494, EP728769, EP 1272533 and in the international patent application WO00163261.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEhCl and AbE13Cb.

Preferred external electron-donar compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $Ra^5Rb^6Si(OR^7)c$ where a and b are integer from O to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropyl-metildimethoxysilane. The external electron donor compound is used in such an amount to give a molar ratio between the organo-aluminum compound and said electron donor compound of from 0.1 to 500; prerably from 1 to 100; more preferably from 2 to 50.

Without to be bound by a theory it is believed that the particular polymerization process used for obtaining the propylene ethylene copolymer gives rise to a polymer having a particular crystallinity due to the distribution of ethylene in the xylene soluble and insoluble fraction at 25°C.

The propylene ethylene copolymer of the present disclosure can be advantageously used for the production of films such as cast, BOPP and multilayer films. The films shows good oxygen and water transmission together with a particularly high transparency. so that it can be advantageously used for the packaging of fresh foodstuff, like salad and vegetables.

The propylene ethylene copolymer of the present disclosure can be also advantageously used for the production of injection molded articles, especially relatively soft articles due to the tensile modulus.

The propylene ethylene copolymer of the present disclosure may also contain the additives that are commonly used in the art such as anti-oxidants, process stabilizers, slip agents, antistatic agents, antiblock agents, nucleating agents and antifog agents.

The following examples are given to illustrate, not to limit, the present **disclosure:**

EXAMPLES

**Xylene-soluble (XS) Fraction at 25 °C**

Xylene Solubles at 25°C have been determined according to ISO 16 152; with solution volume of 250 ml, precipitation at 25°C for 20 minutes, 10 of which with the solution in agitation (magnetic stirrer), and drying at 70°C.

**Melt Flow Rate (MFR)**

Measured according to ISO 1133 at 230 °C with a load of 2.16 kg, unless otherwise specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.
The passage of the meniscus in front of the upper lamp starts the counter, which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [YJ].

**Determination of the Haze**

Multilayer film speciments prepared as described below have been used. The haze value is measured using a Gardner photometric unit connected to a Hazemeter type UX-10 or an equivalent instrument having G.E. 1209 light source with filter "C". Reference samples of known haze are used for calibrating the instrument according to ASTM D1003.

**Ethylene content in the copolymers**

$^{13}$C NMR spectra were acquired on a Bruker AV-600 spectrometer equipped with cryoprobe, operating at 160.91 MHz in the Fourier transform mode at 120 °C.
The peak of the S carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120 °C with a 8 % wt/v concentration. Each spectrum was acquired with a 90° pulse, and 15 seconds of delay between pulses and CPD to remove $^1$H-$^{13}$C coupling. 512 transients were stored in 32K data points using a spectral window of 9000 Hz.
The assignments of the spectra, the evaluation of triad distribution and the composition were made according to Kakugo ("Carbon-13 NMR determination of monomer sequence distribution m ethylene-propylene copolymers prepared with 8-titanium trichloride-diethylaluminum chloride" M. Kakugo, Y. Naito, K. Mizunuma and T. Miyatake, Macromolecules, 1982, 15, 1150) using the following equations:

$$PPP = 100\,T\ /S \qquad PPE = 100\,T8/S \qquad EPE = 100\,T88/S$$

$$PEP = 100\,S\ /S \qquad PEE = 100\,S8/S \qquad EEE = 100\,(0.25\,Sy8+0.5\,S88)/S$$

$$S = T\ + T8 + T88 + S\ + S8 + 0.25\,Sy8 + 0.5\,S88$$

The molar percentage of ethylene content was evaluated using the following equation:
E% mol = 100 * [PEP+PEE+EEE]The weight percentage of ethylene content was evaluated using the following equation:

$$100\ {}^*E\%\,mol\ {}^*MWE$$

$$E\% \text{ wt.} = E\% \text{ mol} * MWE + P\% \text{ mol} * MWP$$

where P% mol is the molar percentage of propylene content, while MWE and MWP are the molecular weights of ethylene and propylene, respectively.

The product of reactivity ratio rlr2 was calculated according to Carman (C.J. Carman, R.A. Harrington and C.E. Wilkes, Macromolecules, 1977; 10, 536) as:

$$rlr2 = 1 + \frac{(EEE + PEE + 1j - (!' }{PEP} \frac{}{E} + \frac{1j(EEE + PEE + 1jo.s}{PEP}$$

The tacticity of Propylene sequences was calculated as mm content from the ratio of the PPP mmT (28.90-29.65 ppm) and the whole T (29.80-28.37 ppm).

**Oxygen transmission (OTR)**

Measured on a Mocon OX-TRAN 2/60 unit, commercially available from Mocon, Inc., according to ASTM D3985-05(2010)el at 23°C, 0% relative humidity (RH), and 100% 02.

**Water vapor transmission (WVTR)**

Measured on a Mocon PERMATRAN W3/33 unit, commercially available from Mocon, Inc. according to ASTM F1249 at 37.8°C and 90% relative humidity (RH).

**Tensile modulus**

Tensile modulus has been measured by using the Dynamic Mechanical Thermal Analyzer (DMTA). DMTA is calibrated by using the calibration standards according to the manufacturer's instruction manual and internal standard material.

Injection moldeded speciments of the polymer to be measured have been prepared according to ISO 527-2, and ISO 1873-2.

Specimens were conditioned after molding for at least 40 h at +23°C +/-2°C and 50% of relative humidity. Then a sample 50 x 6 x1 mm was cut. A specimen is loaded in the sample fixture, cooled down below glass transition temperature and then hold at this temperature for 15 min. The sample is heated up to softening point at 2°C/min and 1 Hz of frequency of oscillation.

5 tests are performed for each polymer and the average results is given as tensile modulus.

**Example 1**

Preparation of the Ziegler-Natta solid catalyst component

The Ziegler-Natta catalyst was prepared according to Example 5, lines 48-55, of the European Patent EP728769B1.

Preparation of the catalyst system - Precontact

Before introducing it into the polymerization reactors, the solid catalyst component described above 1s contacted with aluminum-triethyl (TEAL) and with the dicyclopentyldimethoxysilane (D donor) under the conditions reported in Table 1.

Prepolymerization

The catalyst system is then subject to prepolymerization treatment at 20°C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator. The polymer particles exiting from the polymerization step were subjected to a steam treatment to remove the unreacted monomers and dried under a nitrogen flow.

The main precontact, prepolymerization and polymerization conditions and the quantities of monomers and hydrogen fed to the polymerization reactor are reported in Table 1.

Table **1**

| Example **1** | | |
|---|---|---|
| **PRECONTACT** | | |
| Temperature | oc | 15 |
| Residence Time | mm | 13 |
| TEAL/catalyst | wt/wt | 6 |
| TEAL/Ext. Donor | g/g | 4 |
| **PREPOLYMERIZATION** | | |
| Temperature | oc | 20 |
| Residence Time | mm | 8 |
| **POLYMERIZATION** | | |
| Temperature | bar-g | 65 |
| Pressure | bar-g | 24 |
| Residence Time | mm | 120 |
| Mileage | kg/kg | 37000 |
| Split holdup riser | wt% | 40 |
| Split holdup downcomer | wt% | 60 |
| $c2$-$1$ c2-+ c3- riser | mol/mol | 0.018 |
| $C2$-$1$ C2-+ c3- downcomer | mol/mol | 0.041 |
| H2/C3- riser | mol/mol | 0.023 |
| H2/C2- downcomer | mol/mol | 0.23 |
| H2=hydrogen; C2- = ethylene, C3-= propylene | | |

Comparative examples 2 and 3

Comparative example 2 has been obtained by blending 30 % of a propylene copolymer sold by LyondellBasell with the trade name of Adflex C200F and 70% of a propylene random copolymer sold by LyondellBasell with the trade name of Moplen RP320M.

Comparative example 3 is a propylene copolymer sold by LyondellBasell with the trade name of Adflex C200F the properties of the polymer of example 1 and comparative examples 2 and 3 are reported in Table 2.

Table 2

| Ex | | 1 | Comp2 | Comp3 |
|---|---|---|---|---|
| Ethylene content | Wt% | 7.6 | 6.6 | 14.9 |
| Xylene soluble at 25°C | Wt% | 19.4 | 19.4 | 51.2 |
| Intrinsic viscosity xylene solubles | dl/g | 1.94 | 1.96 | 2.24 |
| MFR | g/10 min | 1.8 | | 6.0 |

(continued)

| Ex | | 1 | Comp2 | Comp3 |
|---|---|---|---|---|
| Ethylene m the fraction insoluble m xylene at 25°c | Wt% | 4.3 | 3.1 | 6.2 |
| Ethylene m the fraction soluble in xylene at 25°C | Wt% | 20.1 | 25.0 | 24 |
| PEP sequences m the fraction insoluble m xylene at 25°C | Mol% | 4.3 | 3.1 | 3.7 |
| PEP sequences m the fraction soluble in xylene at 25°C | Mol% | 12.9 | 12.3 | 12.1 |
| PEE sequences m the fraction soluble in xylene at 25°C | Mol% | 9.7 | 12.7 | 12.5 |
| EEE sequences m the fraction soluble in xylene at 25°C | Mol% | 4.8 | 8.4 | 7.7 |
| rlr2 m the fraction insoluble m xylene at 25°c | | 3.6 | 5.4 | 6.8 |
| tensile modulus (DMTA) | MPa | 738 | 889 | Not measured |

Table 2 shows that Example 1 and comparative 2 have different PEP PEE and EEE sequences even if the ethylene content and the xylene soluble fraction are the same. The tensile modulus of the polymer of example 1 is lower than that one of the comparative example

**Blends 1-2 Comparative Blends 3-4**

The polymers of example 1 and comparative example 3 have been blended in various percentages with Moplen HP522H a propylene homopolymer sold by LyondellBasell having a MFR of 2.0 g/10 min and a solubility in xylene at 25°C of 4.9 as reported in Table 3:

Table 3

| components | | blend 1 | blend 2 | blend 3 | blend 4 |
|---|---|---|---|---|---|
| HP522H | Wt% | 70 | 70 | 60 | 60 |
| Ex 1 | Wt% | 30 | | 40 | |
| Comp ex. 3 | Wt% | | 30 | | 40 |

BOPP *A/B/A* films were produced. The B layer was made with blends 1-4 while the A layer was Moplen HP522H. The thickness of the films was 30 microns, with the A layer being 1 micron. The results of the analysis of the films are reported in Table 4.

Table 4

| components | | blend 1 | blend 2 | blend 3 | blend 4 |
|---|---|---|---|---|---|
| WVTR | cc/m$^2$x day | 5.97 | 6.44 | 6.1 | 6.99 |
| OTR | cc/m$^2$x day | 2338 | 2394 | 2485 | 3359 |
| haze | % | 1.67 | 5.20 | 2.30 | 6.32 |

Table 4 clearly shows that the **OTR** and the **WVTR** of the film comprising the propylene ethylene copolymer according to the present disclosure (blend 1 and blend 3) is comparable with that of comparative examples but the haze is considerably decreased.

**Claims**

1.  A propylene ethylene copolymer having:

    i) xylene soluble fraction at 25°C ranging from 14 wt% to 27 wt%
    ii) intrinsic viscosity of the fraction soluble in xylene at 25°C ranging from 1.0 to 2.4 dl/g;

iii) melt flow rate, MFR, measured according to ISO 1133 at 230 °C with a load of 2.16 kg, ranging from 1.0 g/10 min to 50.0 g/10 min;

iv) an ethylene derived units content ranging from 5.0 wt% to 12.0 wt%

v) the ethylene derived units content on the fraction insoluble in xylene at 25°C ranging from 2.5 wt% to 6.0 wt%;

vi) the ethylene derived units content on the fraction soluble in xylene at 25°C ranging from ranges from 17.2 wt% to 24.8wt%;

vii) the C$^{13}$ NMR sequences PEP measured on the fraction insoluble in xylene at 25°C ranging from 3.5mol% to 5.5mol% and the C$^{13}$ NMR sequences PEP measured on the fraction soluble in xylene at 25°C ranging from 11.0 mol% to 14.2 mol%.

2.  The propylene ethylene copolymer according to anyone of claims 1-4 the melt flow rate, MFR, measured according to ISO 1133 at 230 °C with a load of 2.16 kg, ranges from 1.4 g/10 min to 20.2 g/10 min.

3.  The propylene ethylene copolymer according to anyone of claims 1-2 wherein the xylene soluble fraction at 25 °C ranges from 17 wt% to 25 wt%.

4.  The propylene ethylene copolymer according to anyone of claims 1-3 wherein the intrinsic viscosity of the fraction soluble in xylene at 25 °C ranges from 1.5 to 2.2 dl/g.

5.  The propylene ethylene copolymer according to anyone of claims 1-4 wherein the melt flow rate, MFR, measured according to ISO 1133 at 230 °C with a load of 2.16 kg, ranges from 1.6 g/10 min to 4.0 g/10 min.

6.  The propylene ethylene copolymer according to anyone of claims 1-5 wherein the C$^{13}$ NMR sequences PEP measured on the fraction insoluble in xylene at 25°C ranges from 3.8mol% to 5.2mol%; and the C$^{13}$ NMR sequences PEP measured on the fraction soluble in xylene at 25°C ranges from 11.5 mol% to 13.8 mol.

7.  The propylene ethylene copolymer according to anyone of claims 1-6 wherein the C$^{13}$ NMR sequences PEP measured on the fraction insoluble in xylene at 25°C ranges 3.9mol% to 4.8 mol%; and the C$^{13}$ NMR sequences PEP measured on the fraction soluble in xylene at 25°C ranges 12.3 mol% to 13.5 mol%.

8.  The propylene ethylene copolymer according to anyone of claims 1-7 wherein the ethylene derived units content on the fraction insoluble in xylene at 25°C ranges from 3.2 wt% to 5.2 wt%.

9.  The propylene ethylene copolymer according to anyone of claims 1-8 wherein the C$^{13}$ NMR sequences PEE measured on the fraction soluble in xylene at 25°C range from 7.2 mol% to 12.0 mol%;

10. The propylene ethylene copolymer according to anyone of claims 1-9 wherein the C$^{13}$ NMR sequences EEE measured on the fraction soluble in xylene at 25°C are lower than 6.5 mol%.

11. The propylene ethylene copolymer according to anyone of claims 1-10 wherein the ratio r1/r2 of the fraction unsoluble in xylene at 25°C measured with C$^{13}$ NMR is comprised between 2.4 and 4.6

**Patentansprüche**

1.  Propylen-Ethylen-Copolymer mit

    i) einer in Xylol bei 25 °C löslichen Fraktion im Bereich von 14 Gew.% bis 27 Gew.%;

    ii) einer Grenzviskosität der in Xylol bei 25 °C löslichen Fraktion im Bereich von 1,0 und 2,4 dl/g;

    iii) einer Schmelzflussrate, MFR, gemessen gemäß ISO 1133 bei 230 °C unter einer Last von 2,16 kg, im Bereich von 1,0 g/10 min bis 50,0 g/10 min;

    iv) einem Gehalt an von Ethylen abgeleiteten Einheiten im Bereich von 5,0 Gew.% bis 12,0 Gew.%;

    v) einem Gehalt an von Ethylen abgeleiteten Einheiten in der in Xylol bei 25 °C unlöslichen Fraktion im Bereich von 2,5 Gew.% bis 6,0 Gew.%;

    vi) einem Gehalt an von Ethylen abgeleiteten Einheiten in der in Xylol bei 25 °C löslichen Fraktion im Bereich von 17,2 Gew.% bis 24,8 Gew.%;

    vii) wobei die C$^{13}$-NMR-Sequenzen PEP, gemessen in der in Xylol bei 25 °C unlöslichen Fraktion, im Bereich von 3,5 Mol.% bis 5,5 Mol.% liegen, und die C$^{13}$-NMR-Sequenzen PEP, gemessen in der in Xylol bei 25 °C löslichen Fraktion, im Bereich von 11,0 Mol.% bis 14,2 Mol.% liegen.

**2.** Propylen-Ethylen-Copolymer nach einem der Ansprüche 1 bis 4, wobei die Schmelzflussrate, MFR, gemessen gemäß ISO 1133, bei 230 °C unter einer Last von 2,16 kg, im Bereich von 1,4 g/10 min bis 20,2 g/10 min liegt.

**3.** Propylen-Ethylen-Copolymer nach einem der Ansprüche 1 bis 2, wobei die in Xylol bei 25 °C lösliche Fraktion im Bereich von 17 Gew.% bis 25 Gew.% liegt.

**4.** Propylen-Ethylen-Copolymer nach einem der Ansprüche 1 bis 3, wobei die Grenzviskosität der in Xylol bei 25 °C löslichen Fraktion im Bereich von 1,5 dl/g bis 2,2 dl/g liegt.

**5.** Propylen-Ethylen-Copolymer nach einem der Ansprüche 1 bis 4, wobei die Schmelzflussrate, MFR, gemessen gemäß ISO 1133, bei 230 °C unter einer Last von 2,16 kg, im Bereich von 1,6 g/10 min bis 4,0 g/10 min liegt.

**6.** Propylen-Ethylen-Copolymer nach einem der Ansprüche 1 bis 5, wobei die $C^{13}$-NMR-Sequenzen PEP, gemessen in der in Xylol bei 25 °C unlöslichen Fraktion, im Bereich von 3,8 Mol.% bis 5,2 Mol.% liegen, und die $C^{13}$-NMR-Sequenzen PEP, gemessen in der in Xylol bei 25 °C löslichen Fraktion, im Bereich von 11,5 Mol.% bis 13,8 Mol.% liegen.

**7.** Propylen-Ethylen-Copolymer nach einem der Ansprüche 1 bis 6, wobei die $C^{13}$-NMR-Sequenzen PEP, gemessen in der in Xylol bei 25 °C unlöslichen Fraktion, im Bereich von 3,9 Mol.% bis 4,8 Mol.% liegen, und die $C^{13}$-NMR-Sequenzen PEP, gemessen in der in Xylol bei 25 °C löslichen Fraktion, im Bereich von 12,3 Mol.% bis 13,5 Mol.% liegen.

**8.** Propylen-Ethylen-Copolymer nach einem der Ansprüche 1 bis 7, wobei der Gehalt an von Ethylen abgeleiteten Einheiten in der in Xylol bei 25 °C unlöslichen Fraktion im Bereich von 3,2 Gew.% bis 5,2 Gew.% liegt.

**9.** Propylen-Ethylen-Copolymer nach einem der Ansprüche 1 bis 8, wobei die $C^{13}$-NMR-Sequenzen PEE, gemessen in der in Xylol bei 25 °C löslichen Fraktion, im Bereich von 7,2 Mol.% bis 12,0 Mol.% liegen.

**10.** Propylen-Ethylen-Copolymer nach einem der Ansprüche 1 bis 9, wobei die $^{13}$C-NMR-Sequenzen EEE, gemessen in der in Xylol bei 25 °C löslichen Fraktion, niedriger als 6,5 Mol.% sind.

**11.** Propylen-Ethylen-Copolymer nach einem der Ansprüche 1 bis 10, wobei das Verhältnis r1/r2 der in Xylol bei 25 °C unlöslichen Fraktion, gemessen mittels $^{13}$C-NMR, zwischen 2,4 und 4,6 liegt.

## Revendications

**1.** Copolymère de propylène-éthylène présentant :

i) une fraction soluble dans le xylène à 25 °C allant de 14 % en poids à 27 % en poids ;
ii) une viscosité intrinsèque de la fraction soluble dans le xylène à 25 °C allant de 1,0 à 2,4 dl/g ;
iii) un indice de fluidité à chaud, MFR, mesuré selon la norme ISO 1133 à 230 °C sous une charge de 2,16 kg, allant de 1,0 g/10 min à 50,0 g/10 min ;
iv) une teneur en motifs dérivés de l'éthylène allant de 5,0 % en poids à 12,0 % en poids ;
v) la teneur en motifs dérivés de l'éthylène sur la fraction insoluble dans le xylène à 25 °C allant de 2,5 % en poids à 6,0 % en poids ;
vi) la teneur en motifs dérivés de l'éthylène sur la fraction soluble dans le xylène à 25 °C allant de 17,2 % en poids à 24,8 % en poids ;
vii) les séquences PEP par $^{13}$C-RMN mesurées sur la fraction insoluble dans le xylène à 25 °C allant de 3,5 % en mole à 5,5 % en mole et les séquences PEP par $^{13}$C-RMN mesurées sur la fraction soluble dans le xylène à 25 °C allant de 11,0 % en mole à 14,2 % en mole.

**2.** Copolymère de propylène-éthylène selon l'une quelconque des revendications 1 à 4, l'indice de fluidité à chaud, MFR, mesuré selon la norme ISO 1133 à 230 °C sous une charge de 2,16 kg, allant de 1,4 g/10 min à 20,2 g/10 min.

**3.** Copolymère de propylène-éthylène selon l'une quelconque des revendications 1 à 2, la fraction soluble dans le xylène à 25 °C allant de 17 % en poids à 25 % en poids.

4. Copolymère de propylène-éthylène selon l'une quelconque des revendications 1 à 3, la viscosité intrinsèque de la fraction soluble dans le xylène à 25 °C allant de 1,5 à 2,2 dl/g.

5. Copolymère de propylène-éthylène selon l'une quelconque des revendications 1 à 4, l'indice de fluidité à chaud, MFR, mesuré selon la norme ISO 1133 à 230 °C sous une charge de 2,16 kg, allant de 1,6 g/10 min à 4,0 g/10 min.

6. Copolymère de propylène-éthylène selon l'une quelconque des revendications 1 à 5, les séquences PEP par $^{13}$C-RMN mesurées sur la fraction insoluble dans le xylène à 25 °C allant de 3,8 % en mole à 5,2 % en mole ; et les séquences PEP par $^{13}$C-RMN mesurées sur la fraction soluble dans le xylène à 25 °C allant de 11,5 % en mole à 13,8 % en mole.

7. Copolymère de propylène-éthylène selon l'une quelconque des revendications 1 à 6, les séquences PEP par $^{13}$C-RMN mesurées sur la fraction insoluble dans le xylène à 25 °C allant de 3,9 % en mole à 4,8 % en mole ; et les séquences PEP par $^{13}$C-RMN mesurées sur la fraction soluble dans le xylène à 25 °C allant de 12,3 % en mole à 13,5 % en mole.

8. Copolymère de propylène-éthylène selon l'une quelconque des revendications 1 à 7, la teneur en motifs dérivés de l'éthylène sur la fraction insoluble dans le xylène à 25 °C allant de 3,2 % en poids à 5,2 % en poids.

9. Copolymère de propylène-éthylène selon l'une quelconque des revendications 1 à 8, les séquences PEE par $^{13}$C-RMN mesurées sur la fraction soluble dans le xylène à 25 °C allant de 7,2 % en mole à 12,0 % en mole.

10. Copolymère de propylène-éthylène selon l'une quelconque des revendications 1 à 9, les séquences EEE par $^{13}$C-RMN mesurées sur la fraction soluble dans le xylène à 25 °C étant inférieures à 6,5 % en mole.

11. Copolymère de propylène-éthylène selon l'une quelconque des revendications 1 à 10, le rapport r1/r2 de la fraction non soluble dans le xylène à 25 °C, mesuré par $^{13}$C-RMN, étant situé entre 2,4 et 4,6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2018057505 W
- EP 45977 A
- EP 361494 A
- EP 728769 A
- EP 1272533 A
- WO 00163261 A
- EP 728769 B1
- EP 782587 A

### Non-patent literature cited in the description

- **D. GELDART.** Gas Fluidisation Technology. J. Wiley & Sons Ltd, 1986, 155
- **HUGGINS, M.L.** *J. Am. Chem. Soc.,* 1942, vol. 64, 2716
- **C. J. CARMAN ; R. A. HARRINGTON ; C. E. WILKES.** Monomer Sequence Distribution in Ethylene-Propylene Rubber Measured by C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution m ethylene-propylene copolymers prepared with 8-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536